# EUROPÄISCHE PATENTSCHRIFT

(11) **EP 3 711 840 B1**
(45) Veröffentlichungstag und Bekanntmachung des Hinweises auf die Patenterteilung: **13.09.2023**
(21) Anmeldenummer: 20164382.2
(22) Anmeldetag: 20.03.2020
(51) Int. Cl.: B01D 45/08, B01D 46/00, B01D 46/24, B01D 50/00

(54) **ENTSTAUBUNGSANLAGE**
DUST EXTRACTION INSTALLATION
INSTALLATION DE DÉPOUSSIÉRAGE

(30) Priorität: 20.03.2019 DE 102019107169
(43) Veröffentlichungstag der Anmeldung: 23.09.2020
(73) Patentinhaber: Novus air GmbH, 01640 Coswig (DE)
(72) Erfinder: Kaiser, Tommy, 01277 Dresden (DE); Honscha, Bork, 01723 Wilsdruff (DE)
(74) Vertreter: Lippert Stachow Patentanwälte Rechtsanwälte Partnerschaft mbB

(56) Entgegenhaltungen:
- DE-A1- 1 607 686
- DE-A1- 4 326 017
- DE-U1- 9 108 189
- DE-U1-202015 103 277
- DE-U1-212016 000 054
- US-A- 4 820 320
- US-A- 4 880 530

## Beschreibung

Die Erfindung betrifft eine Entstaubungsanlage zur Reinigung von mit Partikeln, beispielsweise Schweißrauch oder Laserrauch, belasteter Luft.

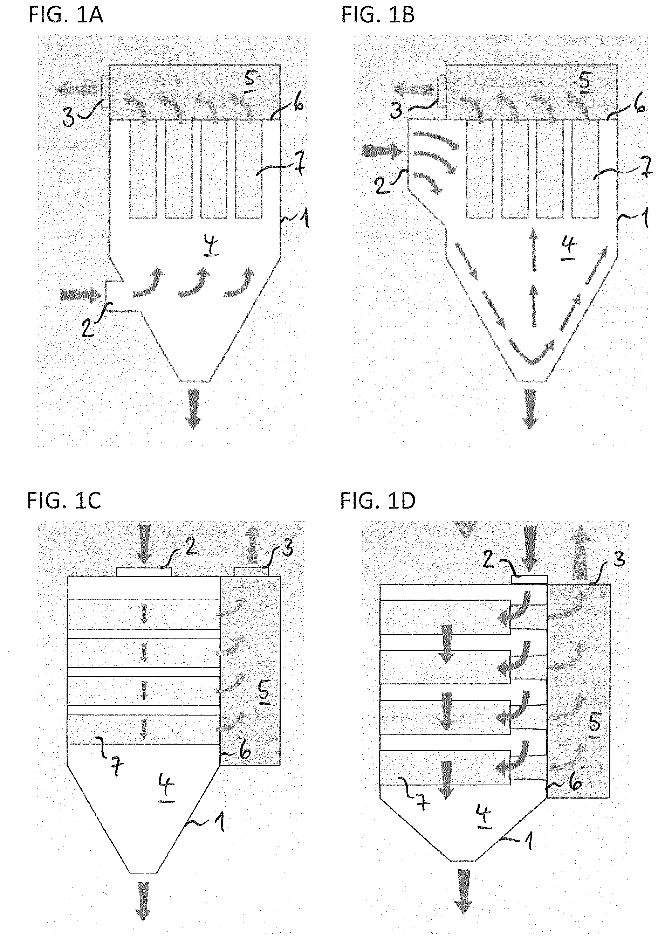

Fig. 1A bis 1D zeigen verschiedene bekannte Ausführungen derartiger Entstaubungsanlagen, die im Wesentlichen aus den gleichen Bestandteilen aufgebaut sind, welche aber unterschiedlich zueinander angeordnet sind:
Üblicherweise weisen derartige Entstaubungsanlagen ein von Gehäusewänden begrenztes Gehäuse 1 auf, das eine Rohgas-Eintrittsöffnung 2 und eine Reingas-Austrittsöffnung 3 aufweist und das durch eine Filteranordnung in einen Rohgasraum und einen Reingasraum unterteilt ist, wobei die Filteranordnung eine Mehrzahl von Filterelementen 7 umfasst. Solche Filterelemente 7 können beispielsweise Filtersäcke mit oder ohne Stützstruktur, oder selbsttragende Filterpatronen (z.B. zylindrisch) oder Filterkassetten (z.B. plattenförmig) sein.

Das staubbelastete Rohgas tritt durch die Rohgas-Eintrittsöffnung 2 in das Gehäuse ein. Der Staub wird im Rohgasraum 4 aus dem Rohgas abfiltriert. Durch die Filterelemente 7 hindurch tretendes und dadurch entstaubtes Reingas gelangt so in den Reingasraum 5 und kann das Gehäuse 1 anschließend durch die Reingas-Austrittsöffnung 3 verlassen. Das Gehäuse 1 verjüngt sich meist im unteren Bereich nach unten hin und bildet dadurch einen Trichter, an dessen unterem Ende der abfiltrierte Staub aus dem Rohgasraum 4 entnommen werden kann. Oftmals ist das Gehäuse 1 dazu so ausgebildet, dass am unteren Ende des Gehäuses 1 ein Staubsammelbehälter 8, beispielsweise ein sogenannter Hobbock, angebracht werden kann.

Fig. 1A und 1B zeigen Ausgestaltungen, bei denen die Filterelemente 7 vertikal ausgerichtet und an einer horizontalen Trägerplatte 6 hängend angebracht sind. Bei der Ausgestaltung der Fig. 1A tritt der Rohgasstrom am unteren Ende des Gehäuses 1 horizontal in den Rohgasraum 4 ein und muss aufsteigen, um die Filterelemente 7 zu erreichen und durch diese hindurch in den Reingasraum 5 zu gelangen. Bei der Ausgestaltung der Fig. 1B tritt der Rohgasstrom hingegen am oberen Ende des Gehäuses 1 horizontal in den Rohgasraum 4 ein und trifft dort direkt auf die Filterelemente 7. In beiden Fällen wird der Staub nach unten abgeführt, während das Reingas nach oben aufsteigen muss.

Fig. 1C und 1D zeigen Ausgestaltungen, bei denen die Filterelemente 7 horizontal ausgerichtet an einer vertikalen Trägerplatte 6 angebracht sind. Bei der Ausgestaltung der Fig. 1C tritt der Rohgasstrom am oberen Ende des Gehäuses 1 vertikal abwärts in den Rohgasraum 4 ein und trifft direkt auf die Filterelemente 7. Um durch die Filterelemente 7 hindurch in den Reingasraum 5 zu gelangen, muss das Gas eine rechtwinklige Richtungsänderung erfahren. Bei der Ausgestaltung der Fig. 1D tritt der Rohgasstrom ebenfalls am oberen Ende des Gehäuses 1 vertikal abwärts in den Rohgasraum 4 ein, allerdings im Bereich der Trägerplatte 6, an der die Filterelemente 7 angebracht sind. Damit die Filterelemente 7 wirken können, muss das Rohgas also zunächst seine Richtung um 90° ändern, um an den

Filterelementen 7 entlangzuströmen, damit der darin enthaltene Staub abfiltriert wird und das gereinigte Gas durch die Filterelemente 7 hindurchtreten kann. Um anschließend in den Reingasraum 5 zu gelangen, muss das Reingas nochmals eine Richtungsänderung erfahren, diesmal sogar um 180°. Auch hier wird in beiden Fällen der Staub nach unten abgeführt, während das Reingas in letzter Konsequenz nach oben aufsteigen muss.

Die bekannten Entstaubungsanlagen sind daher strömungstechnisch eher ungünstig, weil die Richtungen der Partikelabsonderung, der Gasströmung und der Schwerkraft auseinanderfallen.

Die US 4 880 530 A offenbart eine Siebvorrichtung zur Abscheidung feiner Partikel aus einem Luftstrom und einem Grob- und Feingut enthaltenden Partikelgemisch, die ein kastenförmiges, hohles Gehäuse umfasst, das in einem spitzen Winkel nach unten geneigt ist. Das Gehäuse enthält eine Vielzahl von länglichen Siebelementen und eine Luftreinigungsvorrichtung, die aus einem Blasrohr und einer Reihe von Düsen besteht, die über Venturirohre auf die Siebelemente gerichtet sind. In regelmäßigen Abständen wird ein Luftstrahl oder -impuls in die Venturirohre eingeblasen, um den Luftstrom umzukehren und die Siebelemente von anhaftenden groben Partikeln zu befreien. Eine weitgehend vollständige Entfernung der Feinteile kann durch den Einsatz einer Rückführschleife zwischen dem Grobpartikelauslass und dem Einlass des Gehäuses erreicht werden.

In der DE 91 08 189 U1 wird ein Filtrationsapparat zur Entstaubung beschrieben, bestehend aus einem Filtergehäuse mit Rein- und Rohgasraum, einer Trennwand mit daran befestigten Filterelementen, einer Reingasabführung, einer Rohgaszuführung, einem Staubaustrag mit Sedimentationszone sowie einer Druckgasleitung zur Spülgaszuführung.

Die US 4 820 320 A lehrt einen Staubsammler mit einem Gehäuse, das eine Eintrittsöffnung und eine Austrittsöffnung auf allgemein gleicher Höhe aufweist. Das Gehäuse hat einen obersten Teil und einen untersten Trichterteil mit mindestens einer allgemein nach unten und innen geneigten flachen Oberfläche. Am Boden des Trichters befindet sich eine Übergabeschieberanordnung. Eine flache Innenwand ist innerhalb des Gehäuses parallel zu einer flachen, schrägen Wand des Trichters, aber in einem gewissen Abstand davon, angebracht. Im Gehäuse sind zwischen der Innenwand und der parallelen Trichterwand zylindrische Filterelemente angebracht, die im Wesentlichen bündig mit dieser Wand abschließen. Somit sind alle Filterelemente zumindest teilweise innerhalb des Trichters angebracht. Die Filterelemente sind so angebracht, dass die Filterelemente in einer bestimmten Reihe nicht vertikal mit den Filterelementen in einer unmittelbar benachbarten Reihe ausgerichtet sind. Den Filterelementen ist eine Impulsstrahl-Reinigungseinrichtung zugeordnet, die funktionsfähig ist. Ablenkschilde sind im Gehäuse zwischen den obersten Filterelementen und der Eintrittsöffnung angebracht.

In der DE 20 2015 103 277 U1 wird eine Luftfilteranlage mit einem vertikalen Aufbau offenbart, wobei am oberen Bereich der Anlage eine Ansaugöffnung vorgesehen ist durch die mit abzuscheidenden Partikeln belastete Luft angesaugt werden kann, wobei im Innern der Anlage ein Vertikalkanal vorgesehen ist durch welchen die angesaugte belastete Luft im Innern der Anlage nach unten geführt wird, wobei der Vertikalkanal im unteren Bereich der Anlage seitlich eine Öffnung aufweist, durch welchen der Luftstrom auf einen im Bereich der Öffnung angeordneten Materialvorabscheider gelenkt wird und durch diesen hindurchgeführt wird, wobei im Luftweg nach dem Materialvorabscheider ein Prozessraum vorgesehen ist, in den der Luftstrom nach dem Materialvorabscheider gelangt, wobei in dem Prozessraum ein oder mehrere Filterkörper angeordnet ist/sind, wobei im Luftweg nach dem Prozessraum ein den Luftstrom antreibendes Gebläse vorgesehen ist, dadurch gekennzeichnet, dass der Materialvorabscheider eine Eintrittsseite und eine Austrittsseite für einen partikelbelasteten Luftstrom aufweist und aus mehreren vertikal übereinander angeordneten streifenförmigen Abscheideelementen, besteht, wobei die Abscheideelemente von oben nach unten zunächst mit einem ansteigenden positiven Winkel gegen die Vertikale angeordnet sind und wenigstens ein unteres Abscheideelement in einem negativen Winkel gegen die Vertikale aufweist.

In der DE 1 607 686 A1 wird eine Entstaubungsfilteranlage aus einem Filtergehäuse mit darin an eine Staubluftzutrittskammer und Reinluftaustrittskammer angeschlossenen Filterschläuchen sowie unterhalb der Filterschläuche angeordneter Staubaustragevorrichtung beschrieben, wobei die Filterschläuche an eine als Hohlboden ausgebildete Reinluftaustrittskammer und der Hohlboden unter Zwischenschaltung einer Umsteuereinrichtung an einer Druckluftzuführung angeschlossen sind.

Eine Aufgabe der Erfindung besteht daher darin, die Nachteile bekannter Entstaubungsanlagen zu beheben.

Diese Aufgabe wird durch eine Entstaubungsanlage mit den Merkmalen des Anspruchs 1 gelöst. Vorteilhafte Ausgestaltungen und Weiterbildungen sind Gegenstand der abhängigen Ansprüche.

Zur Lösung der Aufgabe wird eine Entstaubungsanlage zur Reinigung von mit Partikeln, beispielsweise Schweißrauch oder Laserrauch, belasteter Luft vorgeschlagen mit einem von Gehäusewänden begrenzten Gehäuse, das eine Rohgas-Eintrittsöffnung und eine Reingas-Austrittsöffnung aufweist und das durch eine Filteranordnung in einen Rohgasraum und einen Reingasraum unterteilt ist, wobei die Filteranordnung eine Trägerplatte sowie eine Mehrzahl von mit der Trägerplatte verbundenen Filterelementen umfasst, die als selbsttragende zylindrische Filterpatronen mit einem offenen Ende und einem geschlossenen Ende ausgeführt sind, die jeweils mit ihrem offenen Ende stehend an einer dafür vorgesehenen Öffnung der Trägerplatte lösbar angebracht sind, und wobei zwischen der Rohgas-Eintrittsöffnung und der Filteranordnung eine Strömungsverteileinrichtung so angeordnet ist, dass ein durch die Rohgas-Eintrittsöffnung eintretender Rohgasstrom abgebremst und gleichmäßig verteilt wird, wobei die Strömungsverteileinrichtung eine Prallplatte umfasst, die quer zur Strömungsrichtung eines in das Gehäuse eintretenden Rohgasstroms angeordnet ist und die sich unter Bildung eines umlaufenden Spalts auf die Gehäusewände des Gehäuses zu erstreckt.

Ein durch die Rohgas-Eintrittsöffnung in das Gehäuse eintretender Rohgasstrom weist in der Regel eine relativ große Geschwindigkeit auf und führt zu einer turbulenten Umströmung der Filterelemente, wobei Anteile der Rohgasströmung in allen Raumrichtungen auftreten, wenn der Rohgasstrom direkt auf die Filterelemente gelenkt wird. Je größer der Volumenstrom und damit die Einströmgeschwindigkeit sind, desto stärker findet eine Verwirbelung der Luft im Rohgasraum statt, die zu starken Aufwärtsströmungen führen kann, welche die Abreinigung der Partikel sowie deren Bewegung in Richtung des Austrages verhindern.

Aus diesem Grund wird der Rohgasstrom durch die vorgeschlagene Strömungsverteileinrichtung zunächst abgebremst und dann gezielt in einer Abwärtsrichtung gleichmäßig über die Filterelemente geleitet.

Gemäß einer Ausgestaltung ist vorgesehen, dass die Trägerplatte als gegenüber der Horizontalen geneigte Ebene ausgeführt ist.

In weiterer Ausgestaltung kann vorgesehen sein, dass die Filterelemente gegenüber der Vertikalen geneigt angeordnet sind. Ist die Trägerplatte um einen bestimmten Winkel gegenüber der Horizontalen geneigt, so sind die Filterelemente um denselben Winkel gegenüber der Vertikalen geneigt, wenn die Filterelemente auf der Trägerplatte im rechten Winkel befestigt sind. Es sind jedoch auch Ausgestaltungen möglich, bei denen der Neigungswinkel der Trägerplatte gegenüber der Horizontalen und der Neigungswinkel der Filterelemente gegenüber der Vertikalen sich unterscheiden. In diesem Fall sind die Filterelemente nicht im rechten Winkel auf der Trägerplatte befestigt. Beispielsweise kann der Neigungswinkel der Filterelemente größer als der Neigungswinkel der Trägerplatte gewählt sein, um eine leichtere und gründlichere Abreinigung der Filterelemente vom darauf angesammelten, aus dem Rohgas abfiltrierten Staub zu ermöglichen.

Vorteilhaft kann unterhalb der Trägerplatte im Rohgasraum ein Auffangbehälter für abfiltrierten Staub angeordnet sein. Weist das Gehäuse in seinem unteren Bereich eine Verjüngung auf, so kann der untere Rand dieser Verjüngung vorteilhaft zur Anbringung eines Staubsammelbehälters ausgebildet sein.

Eine besonders kompakte Bauform der vorgeschlagenen Entstaubungsanlage kann dadurch erzielt werden, dass unterhalb der Trägerplatte im Reingasraum ein Ventilator zur Erzeugung einer Gasströmung von der Rohgas-Eintrittsöffnung zur Reingas-Austrittsöffnung angeordnet ist. Auf diese Weise wird der Rohgasstrom durch Unterdruck in das Gehäuse und durch die Filterelemente hindurch gesogen.

Die vorgeschlagene Strömungsverteileinrichtung umfasst eine Prallplatte, die quer zur Strömungsrichtung eines in das Gehäuse eintretenden Rohgasstroms angeordnet ist und die sich unter Bildung eines umlaufenden Spalts auf die Gehäusewände des Gehäuses zu erstreckt. Der in das Gehäuse eintretende Rohgasstrom kann durch den Spalt hindurch in den Bereich der hinter der Prallplatte befindlichen Filteranordnung strömen. Er wird durch die Strömungsverteileinrichtung so im Rohgasraum verteilt, dass im Bereich der Filterelemente möglichst keine Aufstiegsgeschwindigkeit herrscht und die von den Filterelementen abgereinigten Partikel abwärts, beispielsweise in Richtung eines unterhalb befindlichen Auffangbehälters, geleitet werden. Das Rohgas umströmt die Filterelemente, wodurch der darin enthaltene Staub abfiltriert wird und das durch die Filterelemente hindurch tretende, gereinigte Gas tritt in den Reingasraum ein und entströmt von dort durch die Reingas-Austrittsöffnung aus dem Gehäuse.

Zusätzlich kann die Strömungsverteileinrichtung Strömungsleitbleche umfassen, die im Bereich der Filteranordnung an den Gehäusewänden des Gehäuses angebracht sind. Beispielsweise können an einer das Gehäuse nach oben hin abschließenden Wand Strömungsleitbleche vorgesehen sein, die das Rohgas aus dem obersten Bereich des Rohgasraums abwärts auf die Filterelemente zu lenkt, um die Filterwirkung zu erhöhen.

Alternativ oder zusätzlich kann die Strömungsverteileinrichtung Strömungsleitbleche umfassen, die im Bereich der Filteranordnung zwischen den Filterelementen angebracht sind. Hierdurch kann das zwischen den Filterelementen befindliche Rohgas immer wieder auf die Filterelemente zu gelenkt werden, um die Filterwirkung zu erhöhen.

Die vorgeschlagene Konfiguration der Bestandteile der Entstaubungsanlage erfolgt mit dem Ziel, Strömungsumlenkungen innerhalb des Gerätes zu minimieren, und insbesondere Aufwärtsbewegungen des Rohgasstromes zu vermeiden, indem die Richtung der Abreinigung des abfiltrierten Staubes, die Richtung der Strömung des Rohgasstromes von der Rohgas-Eintrittsöffnung zu den Filterelementen und die Richtung der Schwerkraft nahezu übereinstimmen.

Grundlegender Vorteil von Ausgestaltungen der erfindungsgemäßen Entstaubungsanlage, bei denen die Filterelemente stehend angeordnet sind und das Rohgas im oberen Bereich des Gehäuses eingeleitet wird und das Gehäuse von oben nach unten durchströmt ist die Gleichrichtung der Strömungsrichtung, Schwerkraftrichtung sowie Richtung der Partikelabscheidung. Diese Gleichrichtung ist bei begrenztem Bauraum allerdings nur für relativ kleine Volumenströme/Luftgeschwindigkeiten in der Rohgaskammer geeignet, da ein größerer Volumenstrom und somit eine höhere Einströmgeschwindigkeit zwangsläufig eine Verwirbelung der Luft im Rohgasraum zur Folge hat, die zu starken Aufwärtsströmungen führen kann, welche die Abreinigung der Partikel von den Filterelementen sowie deren Bewegung in Richtung des Austrages (z.B. in einem Staubsammelbehälter) verhindern.

Diesen unerwünschten Effekten wird erfindungsgemäß dadurch entgegengewirkt, dass eine Strömungsverteileinrichtung angeordnet wird, welche den Rohgasstrom so führt, dass eine möglichst homogene Strömungsverteilung ohne Aufwärtsströmungen im Rohgasraum bzw. im Bereich der Filterelemente erzeugt wird, welche aber gleichzeitig die Trägerplatte mit ausreichender Strömungsgeschwindigkeit spült, um dort das Ablagern von Partikeln zu verhindern. Zur verbesserten Spülung der Trägerplatte kann diese als geneigte Ebene ausgeführt sein, auf welcher die abgereinigten Partikel in Richtung Austrag rutschen können.

Die Strömungsverteileinrichtung umfasst bevorzugt eine zwischen Rohgas-Eintrittsöffnung und Filterelementen befindliche Prallplatte, die umlaufend mit den Gehäusewänden einen Spalt bildet. Das Rohgas tritt durch den Spalt und verteilt sich so im Rohgasraum, dass die erwähnten Randbedingungen erfüllt werden. Die Geometrie der Prallplatte sowie deren Positionierung zum Lufteinlass wurden durch Tests und Simulationen evaluiert.

Nachfolgend wird die Erfindung anhand eines Ausführungsbeispiels und zugehöriger Zeichnungen näher erläutert. Dabei zeigen
Fig. 1A bis 1D die oben bereits beschriebenen, aus dem Stand der Technik bekannte Entstaubungsanlagenkonzepte,
Fig. 2 eine Schnittdarstellung des Ausführungsbeispiels, und
Fig. 3A bis 3C den schematischen Aufbau von Rohgasraum und Filteranordnung sowie die darin herrschenden Strömungsverhältnisse.

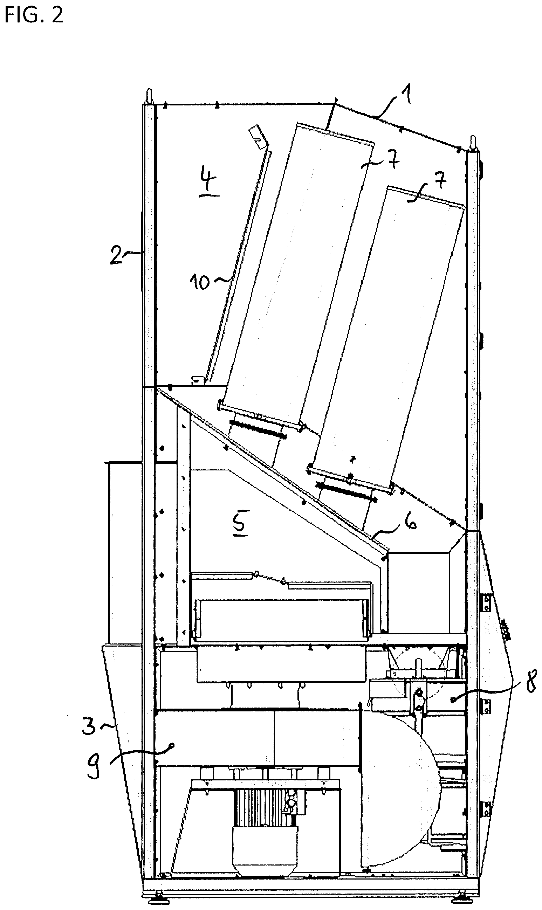

Die in Fig. 2 dargestellte Entstaubungsanlage weist ein Gehäuse 1 auf, das in seinem oberen Bereich in einer vertikalen Gehäusewand eine Rohgas-Eintrittsöffnung 2 und im unteren Bereich derselben vertikalen Gehäusewand eine Reingas-Austrittsöffnung 3 aufweist. Unterhalb der Trägerplatte 6 ist im Rohgasraum 4 ein Auffangbehälter 8 für abfiltrierten Staub und im Reingasraum 5 ein Ventilator 9 zur Erzeugung einer Gasströmung von der Rohgas-Eintrittsöffnung 2 zur Reingas-Austrittsöffnung 3 angeordnet.

Eine Filteranordnung unterteilt das Gehäuse 1 in einen Rohgasraum 4 und einen Reingasraum 5. Die Filteranordnung besteht aus einer Trägerplatte 6 und einer Mehrzahl von mit der Trägerplatte 6 verbundenen Filterelementen 7. Die Trägerplatte 6 ist als gegenüber der Horizontalen geneigte Ebene ausgeführt. Die Filterelemente 7 sind selbsttragende zylindrische Filterpatronen. Diese sind jeweils mit ihrem offenen Ende stehend an einer dafür vorgesehenen Öffnung der Trägerplatte 6 lösbar angebracht, wobei die Filterelemente 7 gegenüber der Vertikalen geneigt angeordnet sind.

Zwischen der Rohgas-Eintrittsöffnung 2 und der Filteranordnung ist im Rohgasraum 4 eine Strömungsverteileinrichtung so angeordnet ist, dass ein durch die Rohgas-Eintrittsöffnung 2 eintretender Rohgasstrom abgebremst und gleichmäßig verteilt wird. Die Strömungsverteileinrichtung umfasst eine Prallplatte 10, die quer zur Strömungsrichtung eines in das Gehäuse 1 eintretenden Rohgasstroms angeordnet ist und die sich unter Bildung eines umlaufenden Spalts auf die Gehäusewände des Gehäuses 1 zu erstreckt.

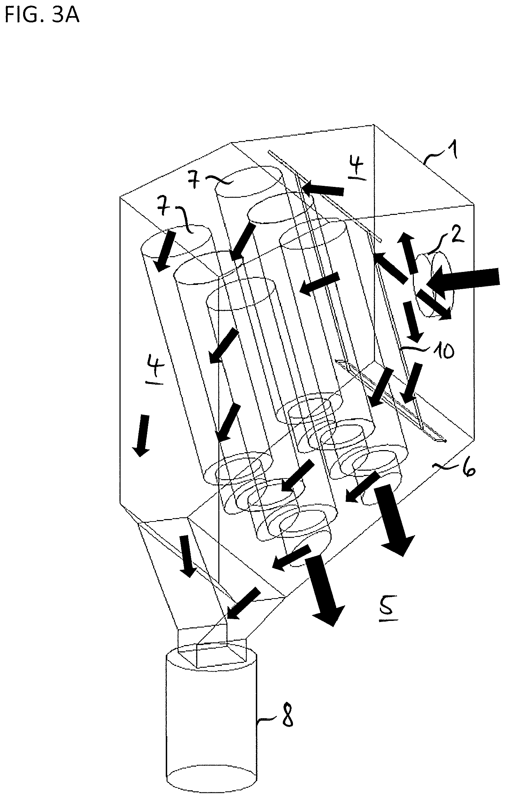

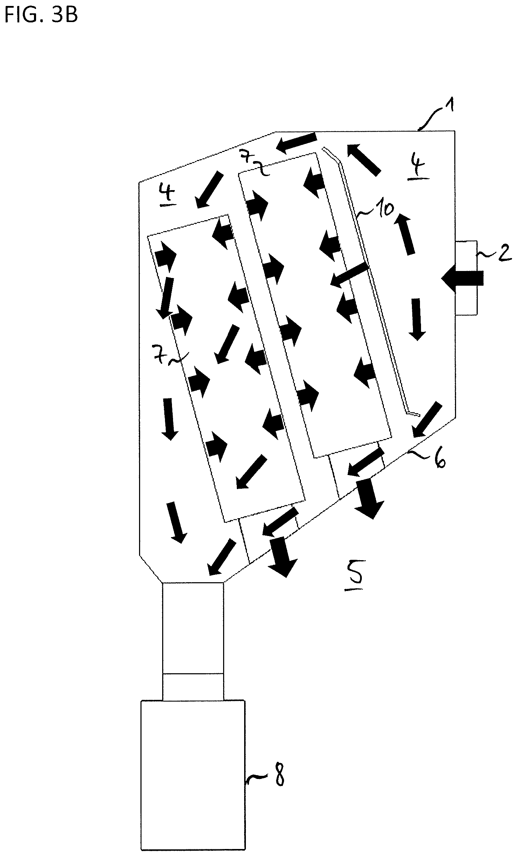

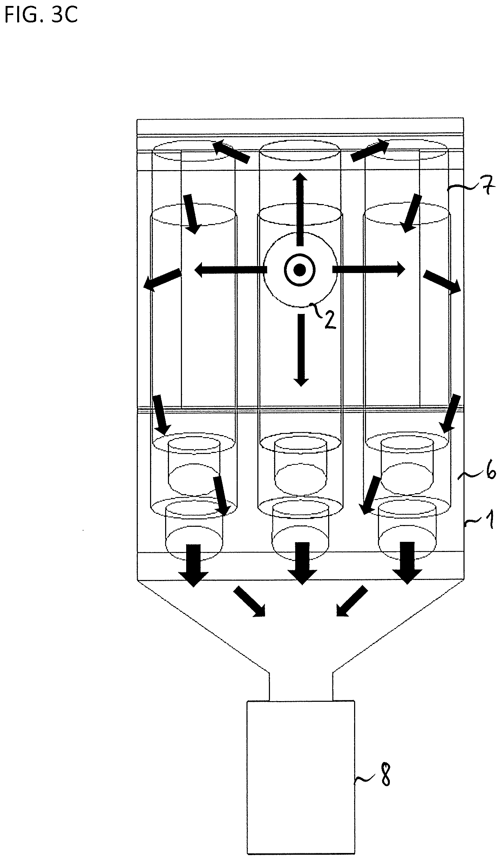

Wie aus den Fig. 3A bis 3C erkennbar ist, wird der durch die Rohgas-Eintrittsöffnung 2 in das Gehäuse 1 eintretende Rohgasstrom beim Auftreffen auf die Prallplatte 10 abgebremst. Das zwischen der Rohgas-Eintrittsöffnung 2 und der Prallplatte 10 befindliche Rohgasvolumen umströmt die Prallplatte 10 und tritt durch den Spalt hindurch in den Bereich der hinter der Prallplatte 10 angeordneten Filterelemente 7 und umströmt diese gleichmäßig, mit geringer Geschwindigkeit und generell abwärts gerichteter Strömungsrichtung, wodurch der darin enthaltene Staub abfiltriert wird. Das durch die Filterelemente 7 hindurch tretende, gereinigte Gas tritt in den Reingasraum 5 ein und entströmt von dort durch die Reingas-Austrittsöffnung 3 aus dem Gehäuse 1. Das Rohgas hat durch die Wirkung der Prallplatte 10 auf seinem gesamten Weg innerhalb des Rohgasraums 4 eine abwärts gerichtete Strömungsrichtung.

### Bezugszeichenliste

- 1: Gehäuse
- 2: Rohgas-Eintrittsöffnung
- 3: Reingas-Austrittsöffnung
- 4: Rohgasraum
- 5: Reingasraum
- 6: Trägerplatte
- 7: Filterelement
- 8: Auffangbehälter
- 9: Ventilator
- 10: Prallplatte

## Patentansprüche

1. Entstaubungsanlage zur Reinigung von mit Partikeln, beispielsweise Schweißrauch oder Laserrauch, belasteter Luft, mit einem von Gehäusewänden begrenzten Gehäuse (1), das eine Rohgas-Eintrittsöffnung (2) und eine Reingas-Austrittsöffnung (3) aufweist und das durch eine Filteranordnung in einen Rohgasraum (4) und einen Reingasraum (5) unterteilt ist, wobei die Filteranordnung eine Trägerplatte (6) sowie eine Mehrzahl von mit der Trägerplatte (6) verbundenen Filterelementen (7) umfasst, die als selbsttragende zylindrische Filterpatronen mit einem offenen Ende und einem geschlossenen Ende ausgeführt sind, die jeweils mit ihrem offenen Ende stehend an einer dafür vorgesehenen Öffnung der Trägerplatte (6) lösbar angebracht sind, und wobei zwischen der Rohgas-Eintrittsöffnung (2) und der Filteranordnung eine Strömungsverteileinrichtung so angeordnet ist, dass ein durch die Rohgas-Eintrittsöffnung (2) eintretender Rohgasstrom abgebremst und gleichmäßig verteilt wird, wobei die Strömungsverteileinrichtung eine Prallplatte (10) umfasst, die quer zur Strömungsrichtung eines in das Gehäuse (1) eintretenden Rohgasstroms angeordnet ist und die sich unter Bildung eines umlaufenden Spalts auf die Gehäusewände des Gehäuses (1) zu erstreckt.

2. Entstaubungsanlage nach Anspruch 1, bei der die Trägerplatte (6) als gegenüber der Horizontalen geneigte Ebene ausgeführt ist.

3. Entstaubungsanlage nach Anspruch 1 oder 2, bei der die Filterelemente (7) gegenüber der Vertikalen geneigt angeordnet sind.

4. Entstaubungsanlage nach einem der Ansprüche 1 bis 3, bei der unterhalb der Trägerplatte (6) im Rohgasraum (4) ein Auffangbehälter (8) für abfiltrierten Staub angeordnet ist.

5. Entstaubungsanlage nach einem der Ansprüche 1 bis 4, bei der unterhalb der Trägerplatte (6) im Reingasraum (5) ein Ventilator (9) zur Erzeugung einer Gasströmung von der Rohgas-Eintrittsöffnung (2) zur Reingas-Austrittsöffnung (3) angeordnet ist.

6. Entstaubungsanlage nach einem der Ansprüche 1 bis 5, bei der die Strömungsverteileinrichtung Strömungsleitbleche umfasst, die im Bereich der Filteranordnung an den Gehäusewänden des Gehäuses (1) angebracht sind.

7. Entstaubungsanlage nach einem der Ansprüche 1 bis 6, bei der die Strömungsverteileinrichtung Strömungsleitbleche umfasst, die im Bereich der Filteranordnung zwischen den Filterelementen (7) angebracht sind.

## Claims

1. Dust removal installation for cleaning air laden with particles, for example welding fume or laser smoke, comprising a housing (1) which is delimited by housing walls, has a crude gas inlet opening (2) and a clean gas outlet opening (3), and is divided into a crude gas chamber (4) and a clean gas chamber (5) by a filter assembly, wherein the filter assembly comprises a support plate (6) and a plurality of filter elements (7) which are connected to the support plate (6), are in the form of self-supporting cylindrical filter cartridges with an open end and a closed end and are each detachably mounted, with their open end upright, on an opening provided for this purpose in the support plate (6), and wherein a flow distribution device is placed between the crude gas inlet opening (2) and the filter assembly such that a crude gas flow entering through the crude gas inlet opening (2) is decelerated and at the same time distributed, wherein the flow distribution device comprises a baffle plate (10) which is transverse to the flow direction of a crude gas flow entering the housing (1) and extends towards the housing walls of the housing (1) with formation of a peripheral gap.

2. Dust removal installation according to Claim 1, wherein the support plate (6) is in the form of a plane inclined with respect to the horizontal.

3. Dust removal installation according to Claim 1 or 2, wherein the filter elements (7) are inclined with respect to the vertical.

4. Dust removal installation according to one of Claims 1 to 3, wherein a collection container (8) for dust that has been filtered out is placed below the support plate (6) in the crude gas space (4).

5. Dust removal installation according to one of Claims 1 to 4, wherein a fan (9) for generating a gas flow from the crude gas inlet opening (2) to the clean gas outlet opening (3) is placed below the support plate (6) in the clean gas space (5).

6. Dust removal installation according to one of Claims 1 to 5, wherein the flow distribution device comprises flow baffle plates, which are mounted on the housing walls of the housing (1) in the region of the filter assembly.

7. Dust removal installation according to one of Claims 1 to 6, wherein the flow distribution device comprises flow baffle plates, which are mounted between the filter elements (7) in the region of the filter assembly.

## Revendications

1. Installation de dépoussiérage destinée à nettoyer de l'air pollué par des particules, par exemple de la fumée de soudage ou de la fumée de laser, comprenant un boîtier (1) délimité par des parois de boîtier, lequel possède une ouverture d'entrée de gaz brut (2) et une ouverture de sortie de gaz purifié (3) et lequel est subdivisé par un arrangement de filtrage en un espace à gaz brut (4) et un espace à gaz purifié (5), l'arrangement de filtrage comportant une plaque porteuse (6) ainsi qu'une pluralité d'éléments filtrants (7) reliés à la plaque porteuse (6), lesquels sont réalisés sous la forme de cartouches filtrantes cylindriques autoporteuses pourvues d'une extrémité ouverte et d'une extrémité fermée, lesquelles sont respectivement montées amovibles en position verticale par leur extrémité ouverte sur une ouverture prévue à cet effet de la plaque porteuse (6), et un dispositif répartiteur d'écoulement étant disposé entre l'ouverture d'entrée de gaz brut (2) et l'arrangement de filtrage de telle sorte qu'un flux de gaz brut qui pénètre à travers l'ouverture d'entrée de gaz brut (2) est freiné et simultanément réparti uniformément, le dispositif répartiteur d'écoulement comportant une plaque déflectrice (10) qui est disposée transversalement par rapport à la direction d'écoulement d'un flux de gaz brut qui pénètre dans le boîtier (1) et qui s'étend en direction des parois de boîtier du boîtier (1) ne formant une fente circonférentielle.

2. Installation de dépoussiérage selon la revendication 1, avec laquelle la plaque porteuse (6) est réalisée sous la forme d'un plan incliné par rapport à l'horizontale.

3. Installation de dépoussiérage selon la revendication 1 ou 2, avec laquelle les éléments filtrants (7) sont disposés inclinés par rapport à la verticale.

4. Installation de dépoussiérage selon l'une des revendications 1 à 3, avec laquelle un récipient collecteur (8) pour la poussière éliminée par filtrage est disposé au-dessous de la plaque porteuse (6) dans l'espace à gaz brut (4).

5. Installation de dépoussiérage selon l'une des revendications 1 à 4, avec laquelle un ventilateur (9) destiné à générer un écoulement de gaz depuis l'ouverture d'entrée de gaz brut (2) vers l'ouverture de sortie de gaz purifié (3) est disposé au-dessous de la plaque porteuse (6) dans l'espace à gaz purifié (5).

6. Installation de dépoussiérage selon l'une des revendications 1 à 5, avec laquelle le dispositif répartiteur d'écoulement comporte des tôles de guidage d'écoulement qui sont montées dans la zone de l'arrangement de filtrage sur les parois de boîtier du boîtier (1).

7. Installation de dépoussiérage selon l'une des revendications 1 à 6, avec laquelle le dispositif répartiteur d'écoulement comporte des tôles de guidage d'écoulement qui sont montées dans la zone de l'arrangement de filtrage entre les éléments filtrants (7) .
